# EUROPEAN PATENT SPECIFICATION

(11) **EP 3 943 348 B1**
(45) Date of publication and mention of the grant of the patent: **06.09.2023**
(21) Application number: 20187103.5
(22) Date of filing: 22.07.2020
(51) Int. Cl.: B60S 1/40

(54) **ADAPTER FOR WIPING SYSTEMS**
ADAPTER FÜR WISCHSYSTEME
ADAPTATEUR POUR SYSTÈMES D'ESSUYAGE

(43) Date of publication of application: 26.01.2022
(73) Proprietor: VALEO AUTOSYSTEMY Sp. z o.o., 32-050 Skawina (PL)
(72) Inventor: DROZDZIEWICZ, Wojciech, 32050 SKAWINA (PL); WIELGUS, Grzegorz, 32050 SKAWINA (PL); MARTYNIUK, Adam, 32050 SKAWINA (PL); MALINOWSKI, Arkadiusz, 32 050 SKAWINA (PL); HOUSSAT, Stéphane, 63500 ISSOIRE (FR); JOMARD, Olivier, 63500 ISSOIRE (FR)
(74) Representative: Valeo Visibility

(56) References cited:
- EP-A1- 0 528 307
- EP-A1- 3 251 904
- EP-A1- 3 251 905

## Description

The present invention relates to the field of wiping systems for vehicles like motor vehicles. More particularly, the field of the present invention is that of connectors implemented between a wiper arm and a wiper blade of such a wiping system.

Motor vehicles are commonly equipped with wiping systems intended to clean their glass surfaces, and in particular their windshield. Such wiping systems include at least one wiper arm and a wiper blade driven by the wiper arm. The wiper arm is thus connected to an electric motor of the vehicle and connected to at least one wiper blade which is configured to come into contact with the glass surface to be cleaned. In order to be able to drive the wiper blade, a connection device is arranged between this wiper blade and the wiper arm. Such a connection device conventionally comprises at least one connector integral with the wiper blade and at least one adapter which in turn makes it possible to connect the connector, and therefore the wiper blade on which it is fixed, to the wiper arm.

Nowadays there are a multitude of different wiper arms which require as many different connection devices for their attachment to the wiper blade. Many connecting devices are currently marketed which are suitable for use on most of these wiper arms. An example of a wiper arm is described in the document EP-A-3251905.

But those connecting devices are not easily assembled with wiper arms having a hook shaped terminal portion. The mounting principle of those wiper arms is based on the fact that a free end of the hook abuts against a straight wall on a rear side of the connecting device in order to correctly position in translation the hook with respect to the connecting device. Yet, during the dynamic mounting of the wiper arm with the wiping blade, the operator has to apply a load to assemble the adapter with the hook. Most of the time the applied load leads to the free end of the hook passing over the straight wall. The straight wall then no longer fulfills its stopping function. So, the hook is overpulled with respect to the connecting device.

Consequently, the connecting device is longitudinally misplaced with respect with the terminal portion of the wiper arm. The operator therefore loses time, gets frustrated and can harm himself.

The present invention aims to overcome at least one of the aforementioned drawbacks and to further lead to other advantages by proposing a new type of adapter for wiping systems.

The present invention provides an adapter for the connection of a wiper blade to a terminal portion of a wiper arm which is a hook having a curved part and a free end. The adapter comprises two vertical flanks arranged so that the hook is received between the two said flanks, at least one shaft which is extending between the two vertical flanks, a front portion and a rear portion of the adapter which are delimited by a central axis of the shaft, the rear portion comprises two guiding portions, each guiding portion having a U shape section, a first guiding portion comprising an abutment configured to contact an internal face of the hook, a second guiding portion comprising a stop element configured to contact the free end of the hook. The first guiding portion and the second guiding portion are adapted to contact each other in order to avoid contact between the shaft and the curved part of the hook.

The contact between the first guiding portion and the second guiding portion prevents part of the free end of the hook to pass over the stop element. The free end of the hook can then be stopped by the stop element no matter its dimension. So, the free end of hook is always in the right longitudinal position with respect to the adapter. Another consequence is that the contact between the shaft and the curved part of the hook is avoided. In other words, the shaft is always away from the curved part of the hook meaning at non-zero distance from the curved part of the hook. Eventually, the same adapter can be used for at least two different wiper arms which the terminal ends are a hook and have different dimensions.

According to one embodiment, the U shape of the second guiding portion comprises a bottom wall and lateral walls aligned with the vertical flanks, the contact being formed by an edge between the bottom wall of the second guiding portion and the stop element of the second guiding portion. The adapter is thus easier to manufacture and to handle.

According to one embodiment, the second guiding portion comprises a cavity delimited by the bottom wall, the lateral walls and one face of the stop element, the face of the stop element having a plurality of planes. The plurality of planes amplifies the bending of the second guiding portion upon insertion of the adapter in the hook.

According to one embodiment, the U shape of the first guiding portion comprises a bottom wall and lateral walls aligned with the vertical flanks, the first guiding portion comprises at least one rim between a bottom wall of the first guiding portion and the abutment of the first guiding portion, the rim being in contact with the edge in order to avoid contact between the shaft and the curved part of the hook. The adapter is thus easier to manufacture and to handle.

According to one embodiment, the rim of the first guiding portion and/or and the edge of the second guiding portion have a rounded portion. This allows to adjust the contact between the first guiding portion and the second guiding portion.

According to one embodiment, at least one of the guiding portions comprises a locking element intended to cooperate with a locking member of the hook of the wiper arm. This way the adapter is blocked longitudinally with respect to the wiper arm.

According to one embodiment, both guiding portions comprises a locking element intended to cooperate with a locking member of the hook of the wiper arm. Thus, the adapter has an improved mounting ergonomics.

According to one embodiment, the locking element protrudes from the bottom wall of said one of the guiding portions and extends into a cavity delimited by the bottom wall of one of the guiding portions and the lateral portions of said one of the guiding portions.

According to one embodiment, the bottom wall of one of the guiding portions extends in two planes intersecting each other substantially at the level of the locking elements. The wear due to the bending of the guiding portion with respect to the shaft during the assembly of the adapter with the hook is then less more important.

It should be understood here, as well as in all that follows, by "substantially" that the fabrication tolerances, as well as possible assembly tolerances, must be considered.

According to one embodiment, an angle between the two planes intersecting each other is comprised between 181° and 190°.

According to one embodiment, wherein the vertical flanks are disposed on the front portion of the adapter, the vertical flanks being in the same plane as the lateral walls of one of the guiding portions.

According to one embodiment, the two guiding portions have an identical conformation. In other words, both guiding portions are identical in shape and size. The ergonomics of the adapter is then improved.

According to one embodiment, the adapter has a plane of symmetry substantially parallel to a longitudinal and vertical median plane.

According to one embodiment, the adapter has a plane of symmetry substantially parallel to a horizontal and longitudinal median plane.

The adapter can then be used in any direction and orientation with any wiper arms, especially the same adapter can be used with the different wipers arms in a given vehicles.

According to one embodiment, the contact between the first guiding portion and the second guiding portion is made upon bending of the first guiding portion and/or the second guiding portion with respect to the shaft.

According to one embodiment, one of the guiding portions extends along an extension axis, an area of the U-shape section of said one of the guiding portions varies along the extension axis as seen in a plane perpendicular to the extension axis. So, the adapter can be used with any hook no matter its width.

According to one embodiment, the adapter comprises at least one synthetic material.

According to one embodiment, the adapter is made in one molded piece.

According to one embodiment, the invention provides an assembly comprising a wiper arm with a terminal portion which is a hook having a curved part and an adapter having one or more of any of the preceding features wherein the adapter is configured so that the curved part of the hook is at a non-zero distance from the shaft of the adapter when the assembly is assembled.

According to one embodiment, the invention provides a wiping system comprising at least one wiper blade adapted to be driven in rotation by a wiper arm, the wiper arm and the wiper blade being connected together by an adapter having one or more of any of the aforementioned features.

According to one embodiment, the invention provides a vehicle comprising at least one aforementioned wiping system.

Other characteristics and advantages of the invention will become apparent from the following description and from several exemplary embodiments given by way of non-limiting indication with reference to the appended schematic drawings, in which:
[fig 1] Figure 1 is an exploded view in perspective which schematically shows a wiping system comprising a wiper arm, an adapter according to the invention and a wiper blade.
[fig 2] Figure 2 is a side view in the LV plane of an end portion of the wiper arm of the wiping system in Figure 1.
[fig 3] Figure 3 is a view in perspective of the adapter of the wiping system in figure 1.
[fig 4] Figure 4 is a schematic sectional view in the LV plane of the adapter of the wiping system in Figure 1.
[fig 5] Figure 5 is a detailed view in perspective of a face of a stop element of the adapter in figure 3.
[fig 6] Figure 6 is a side view in the LV plane of the adapter when a first guiding portion and a second guiding portion of the adapter contact each other as the adapter is assembled with the wiper arm of figure 1.
[fig 7] Figure 7 is a schematic sectional view in the plane LV of the assembly steps between the adapter and the wiper arm of Figure 1.

It should first be noted that if the figures show the invention in detail for its implementation, they can be used to better define the invention if necessary. It should also be noted that, in all the figures, similar elements and / or elements fulfilling the same function are indicated by the same numbering.

In the description which follows, a direction of a longitudinal axis L, a direction of a transverse axis T and a direction of a vertical axis V are represented by a trihedron (L, T, V) in the figures. A horizontal plane is defined as a plane being perpendicular to the vertical axis V and as a plane comprising the direction of the longitudinal axis L and the direction of the transverse axis T. A longitudinal plane is defined as a plane being perpendicular to the transverse axis T and as a plane comprising the direction of the longitudinal axis X and the direction of the vertical axis Z. And a transverse plane is defined as a plane being perpendicular to the longitudinal axis and as a plane comprising the direction of the transverse axis T and the direction of the vertical axis V.

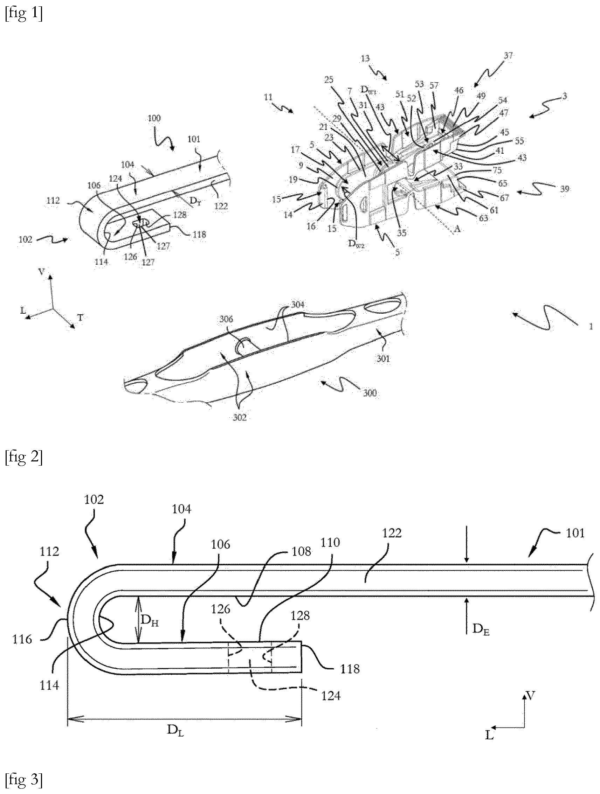

In Figure 1, a part of a wiper arm 100 of a wiping system 1 dedicated to cleaning the glass surface of a vehicle is shown. The wiper arm 100 is associated with an adapter 3 to establish a mechanical connection between the wiper arm 100 and a main articulated bracket 301 of a wiper blade 300 of the wiping system 1.

The arm 100 has a terminal portion 101 which prolongs a main body (not shown) of the arm 100. The terminal portion 101 has a hook 102. The hook 102 is a hook having a C section seen in the longitudinal plane defined above.

The hook 102 comprises an upper strand 104 and a lower strand 106. The upper strand 104 and the lower strand 106 extend in the horizontal plane defined above. The upper strand 104 and the upper strand 106 are parallel with each other. The upper strand 104 is delimited by internal face 108 which is a flat horizontal face facing the lower strand 108. The internal face 108 is therefore an internal face of the hook. The lower strand 106 is delimited by an internal face 110 which is a flat and horizontal face. The internal face 110 of the lower strand 106 is opposite the flat horizontal face 108 of the upper strand 104 and faces the internal face 108 of the upper strand 104. The internal face 110 of the lower strand 106 is also an internal face of the hook 102. The lower strand 106 has a length lower than a length of the upper strand 104. The length of each strand 104, 106 is measured in the horizontal plane, along the longitudinal axis L.

The upper strand 104 is connected to the lower strand 106 by an intermediate strand 112. The intermediate strand 112 is shaped as a semi-cylindrical arc. In other words, the intermediate strand 112 is a curved part of the hook 102 and so of the terminal portion 101. The intermediate strand 112 internally delimits a concave semi-cylindrical bottom 114. The intermediate strand 112 is delimited externally by a convex front face 116.

The lower strand 106 comprises an end connected to the intermediate strand 112 and a free end 118. The free end 118 is longitudinally delimited towards the rear by a transverse and vertical end face. Thus, the free end 118 is a free end of the hook 102, and so of the terminal portion 101.

As illustrated in figure 1 and figure 2, near the free end 118, the lower strand 106 comprises a locking member 124. The locking member 124 is here a through hole which extends along the vertical axis V. The locking member 124 is delimited longitudinally by a front border 126, by a rear border 128, and by lateral borders 127 connecting the front border 126 to the rear border 128. The front border 126 and the rear border 128 are each shaped with a concave rounded profile as seen in the horizontal plane.

The arm 100 is produced in the form of a metal bar which profile is a rectangle with rounded angles as seen in the transverse plane. The metal bar is cut and folded to form the hook shape of the terminal portion 101 of the arm 100. The wiper arm 100 is delimited transversely by two lateral faces 122. The two lateral faces 122 extend in the longitudinal plane, previously defined. The two lateral faces 122 are parallel to each other. In figure 1, the transverse width D_{T} which separates the two lateral faces 122. has been indicated. The transverse width D_{T} is measured along the transverse axis T as seen in the horizontal plane.

In figure 2, the longitudinal distance D_{L} separating the free end 118 of the lower strand 106 from the convex front face 116 of the intermediate strand 112 is indicated. The longitudinal distance D_{L} is measured along the longitudinal axis L as seen in the longitudinal plane. The longitudinal distance D_{L} varies according to the manufacturers and suppliers.

In figure 2, the internal height D_{H} which separates the internal face 108 of the upper strand 104 from the internal face 110 of the lower strand 106 is indicated. The internal height D_{H} corresponds to the diameter of the concave semi-cylindrical bottom 114 of the intermediate strand 112. The internal height D_{H} is measured along the vertical axis V as seen in the longitudinal plane.

In figure 2, a thickness D_{E} of the metal bar forming the hook 102 has been indicated. The thickness D_{E} is measured along the vertical axis as seen in the longitudinal plane.

Referring to figure 1, the main articulated bracket 301 of the wiper blade 300 is a cut and folded metal sheet. The main articulated bracket 301 comprises a central part comprising two sides 302. Each side 302 extends vertically and longitudinally in the longitudinal plane. The two cheeks 302 are parallel to each other. Each cheek 302 is delimited by an internal face 304, the internal faces 304 facing each other.

The main articulated bracket 301 of the wiper blade 300 comprises an articulation rod 306. The articulation rod 306 extends in a direction parallel to the transverse axis T. The articulation rod connects the internal faces 304 of the two cheeks 302. The articulation rod 306 is configured to be received in an internal housing 35 of a shaft 7 of the adapter 3. The articulation rod 306 has a complementary profile and complementary dimensions of the internal housing 35.

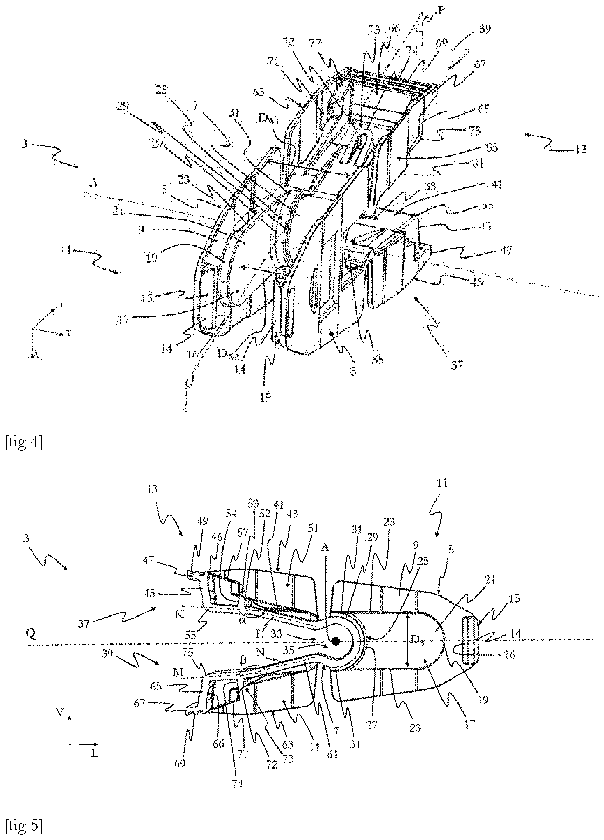

Referring to figure 1 and figure 3, the adapter 3 comprises two flanks 5 which extend each in the longitudinal plane as defined above. The two flanks 5 are parallel to each other. The two flanks 5 are arranged in such a way that the hook 102 of the wiper arm 100 is received between the said two flanks 5.

The two flanks 5 are interconnected by a shaft 7. The shaft 7 has a shape of a cylinder with a circular base. It extends along the transverse axis T between the internal faces 9 of the flanks 5. The shaft 7 has a central axis A parallel to the transverse axis T. The central axis A delimits a front portion 11 of the adapter 3 and a rear portion 13 of the adapter 3. The front portion 11 comprises the two flanks 5 connected to each other by the shaft 7.

The internal faces 9 of the flanks 5 are apart from each other by a distance D_{W1}. The distance D_{W1} is for example substantially equal to 12mm.

Each flank 5 includes a lug 15. The lugs 15 are arranged in the vicinity of the front end of the internal faces 9 of the flanks 5. The lugs 15 extends along the vertical axis V. Each lug 15 includes an inclined front side 14 which extends along the vertical axis V. This shape facilitates the insertion of the hook 102 between the flanks 5.

Each lug 15 comprises a rear vertical side 16 which extends in the transverse plane along the vertical axis V. The rear vertical sides 16 are adapted to interact with at least part of the convex front face 116 of the intermediate strand 112. This allows the lugs 15 to longitudinally lock the hook 102 once assembled with the adapter 3.

As it can be seen in figure 1, in figure 3 and in figure 4, the adapter 3 comprises two first internal sidewalls 17. Each first internal sidewall 17 extends in the longitudinal plane and are located between the two flanks 5. Each first internal sidewall 17 is adjacent to each internal face 9 of flank 5. Each first internal sidewall 17 has a front longitudinal end 19 which is a convex semi-cylindrical arc. Each first internal sidewall 17 is delimited transversely by an internal vertical surface 21. In addition, each first internal sidewall 17 is delimited by two horizontal and longitudinal surfaces 23.

As shown in figure 4, the two horizontal and longitudinal surfaces 23 of each first internal sidewall 17 are parallel to each other. The two horizontal and longitudinal surfaces 23 of each first internal sidewall 17 are separated by a distance Ds. Distance Ds is measured along the transversal axis T as seen in the horizontal plane. The distance Ds is determined so that the adapter 3 can be introduced between the internal face 108 of the upper strand 104 of the hook 102 and the internal face 110 of the lower strand 106 of the hook 102. This introduction takes place almost without play. Thus, the distance Ds between the horizontal and longitudinal surfaces 23 of each first internal sidewall 17 is less than or equal to the internal height D_{H} which corresponds to the diameter of the concave semi-cylindrical bottom 114 of the intermediate strand 112.

The internal vertical surfaces 21 of the two first internal sidewall 17 are separated from each other by a transverse distance D_{W2}. The transverse distance D_{W2} is less than the transverse distance D_{W1}. The transverse distance D_{W2} is for example substantially equal to 9mm.

Referring to figure 1, to figure 3 and to figure 4, the adapter 3 comprises two second internal sidewalls 25. Each second internal sidewall 25 extends in the longitudinal plane and are located between the two flanks 5 and between the internal vertical surface 21 of the first internal sidewalls 17. Each second internal sidewall 25 is adjacent to one of the internal vertical surfaces 21. The two second internal sidewalls 25 are offset longitudinally towards the shaft relative to the first internal sidewalls 17.

Each second internal sidewall 25 has a front end 27 away from the shaft 7. The front end 27 of each second internal sidewall 25 has a semi-cylindrical convex arc shape. The front end 27 of each second internal sidewall 25 is delimited transversely by an internal vertical surface 29. In addition, each second internal sidewall 25 is delimited by two horizontal and longitudinal faces 31 which extend respectively in the same plane as the horizontal and longitudinal faces 23 of the first internal sidewalls 17.

The shaft 7 is a hollow cylinder and includes an opening 33 on a radial end of the hollow cylinder. The opening 33 extends between the two longitudinal ends of the hollow cylinder, in other words along the transversal axis T. The shaft 7 thus delimits an internal housing 35 which allows a rod to be received in rotation like the articulation rod 306 of the main articulated bracket 301 of the wiper blade 300.

The rear portion 13 of the adapter 3 includes a first guiding portion 37 and a second guiding portion 39. Both guiding portions 37, 39 extend along the longitudinal axis L from a radial brink of the shaft 7 in a direction away from the shaft 7.

Referring to figure 1, to figure 3 and to figure 4, each guiding portion 37, 39 has a U shape section. The U shape section of the first guiding portion 37 comprises a bottom wall 41 and two lateral walls 43. As seen in figure4, the bottom wall 41 extends in two planes K, L intersecting each other substantially at the level of a locking element 53 which is described in more details later. The angle α between the two planes K, L intersecting each other is comprised between 171° and 180° as seen in figure 4. Each of those two planes has an angle with the horizontal plane equal to or inferior at 10°.

The two lateral walls 43 extends in the longitudinal plane from the bottom wall 41 to the opposite direction of the second guiding portion 39. The lateral walls 43 are parallel to each other. The lateral walls 43 are aligned with the vertical flanks 5 of the adapter 3.

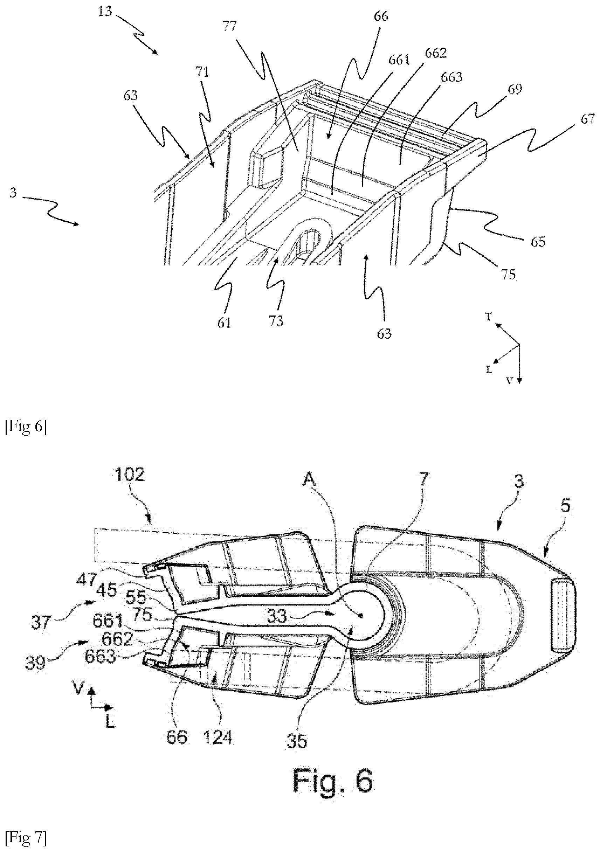

The first guiding portion 37 comprises an abutment 45 which extends in the transversal plane from a free end of the bottom wall 41 to an opposite direction of the second guiding portion 39. The abutment 45 extends between the lateral walls 43. The top free end of the abutment 45 then can come into contact with an internal face 108, 110 of the hook 102 when the hook 102 and the adapter are assembled together. In the illustrated embodiment in figure 1 and figure 6, the abutment 45 comes into contact with the internal face 108 of the upper strand 104 of the hook 102.

In the illustrated example on figure 1 and on figure 4, the abutment 45 comprises a tongue 47. The tongue 47 is a plate extending in the horizontal plane. The tongue 47 is supported by the top free end of the abutment 45. The top face of the tongue 47 can comprise streaks 49 to improve the friction between the top face of the tongue 47, and so between the abutment 45, and another piece. The other piece can be an internal face 108, 110 of the hook 102 or fingers of the operator for a better grip.

The bottom wall 41 and the lateral walls 43 circumscribe a cavity 51 in which the upper strand 104 of the hook 102 can be housed. The first guiding portion 37 comprises the locking element 53 that protrudes from the bottom wall 41. The locking element 53 extends into the cavity 51, in other words it extends away from the second guiding portion 39. The locking element 53 extends along the vertical axis V. The locking element 53 is dimensioned so as to be able to penetrate vertically inside a locking member 124 of the lower strand 106 of the hook 102 of the wiper arm 100. At the same time the locking element 53 can be a support for the internal face 108 of the upper strand 104 of the hook 102 so as to bring nearer the upper strand 104 and the lower strand 106 when the adapter 3 cooperates with the hook 102.

Referring to figure 1, the locking element 53 of the first guiding portion 37 is delimited longitudinally by a transverse arch face 54. The transverse arch face 54 has a convex profile oriented longitudinally towards the abutment 45 when seen in the horizontal plane.

The locking element 53 of the first guiding portion 37 comprises an inclined face 52 extending in an extension plane. The extension plane of the inclined face 52 intersects at least one of the two planes K, L forming the bottom wall 41 of the first guiding portion 37.

One side of the cavity 51 is longitudinally delimited by the abutment 45. The face 46 of the abutment 45 turned towards the cavity 51 has a plurality of planes. In other words, the face 46 of the abutment 45 has a stepped profile as seen in the longitudinal plane.

The first guiding portion 37 comprises at least one rim 55. The rim 55 is at the junction between the bottom wall 41 of the first guiding portion 37 and the abutment 45 of the first guiding portion 37. The rim 55 extends along the transversal axis T. The rim 55 has a rounded shape.

In figure 3, the first guiding portion 37 comprises two ribs 57 in the cavity 51 to accommodate a narrower version of the hook 102 - for example having a transverse width D_{T} substantially equal to 9mm instead of 12mm. Each rib 57 extends along the longitudinal axis L and along a junction between the bottom wall 41 and one of the lateral walls 43. Thus, the section of the first guiding portion 37 as seen in the transversal plane gets smaller as one moves away from the shaft 7 along the longitudinal axis L.

Referring to figure 1, to figure 3 and to figure 4 the U shape section of the second guiding portion 39 comprises a bottom wall 61 and two lateral walls 63. As seen in figure 4, the bottom wall 61 of the second guiding portion 39 extends in two planes M, N intersecting each other substantially at the level of a locking element 73 which is described in more details later. As seen in figure 4, the angle β between the two planes M, N intersecting each other is comprised between 171° and 180°. Each of those two planes has an angle with the horizontal plane equal to or inferior at 10°.

The two lateral walls 63 of the second guiding portion 39 extends in the longitudinal plane from the bottom wall 61 of the second guiding portion 39 to the opposite direction of the first guiding portion 37. The lateral walls 63 of the second guiding portion 39 are parallel to each other. The lateral walls 63 of the second guiding portion 39 are aligned with the vertical flanks 5 of the adapter 3.

The second guiding portion 39 comprises a stop element 65 which extends in the transversal plane from a free end of the bottom wall 61 of the second guiding portion 39 to an opposite direction of the first guiding portion 37. The stop element 65 extends between the lateral walls 63 of the second guiding portion 39. The stop element 65 is configured to contact the free end 118 of the hook 102. In the illustrated embodiment in figure 1 and figure 6, the stop element 65 do not come into contact with the internal face 108 of the upper strand 104 of the hook 102.

In the illustrated example on figure 3 and on figure 4, the stop element 65 comprises a tongue 67. The tongue 67 of the stop element 65 is a plate extending in the horizontal plane. The tongue 67 of the stop element 65 is supported by the top free end of the stop element 65. The top face of the tongue 67 of the second guiding portion 39 can comprise streaks 69.

The bottom wall 61 of the second guiding portion 39 and the lateral walls 43 of the second guiding portion 39 circumscribe a cavity 71 in which the lower strand 106 of the hook 102 can be housed. The second guiding portion 39 comprises the locking element 73 that protrudes from the bottom wall 41 of the second guiding element 39. The locking element 73 of the second element 39 extends into the cavity 71 of the second guiding element 39, in other words it extends away from the first guiding element 37. The locking element 73 extends along the vertical axis V. The locking element 73 is dimensioned so as to be able to penetrate vertically inside a locking member 124 of the lower strand 106 of the hook 102 of the wiper arm 100.

Referring to figure 3, the locking element 73 of the second guiding portion 39 is delimited longitudinally by a transverse arch face 74. The transverse arch face 74 has a convex profile oriented longitudinally towards the stop element 65 when seen in the horizontal plane. The transverse arch face 77 is configured to cooperate with the rear border 128 of the locking member 124 to lock in position the lower strand 106 of the hook 102 once the hook 102 is assembled with the adapter 3.

The locking element 73 of the second guiding portion 39 comprises an inclined face 72 extending in an extension plane. The extension plane of the inclined face 72 intersects at least one of the two planes forming the bottom wall 61 of the second guiding portion 39.

Referring to figure 3 and figure 4, one side of the cavity 71 of the second guiding portion 39 is longitudinally delimited by the stop element 65. The face 66 of the stop element 65 turned towards the cavity 71 has a plurality of planes. In other words, the face 66 of the stop element 65 has a stepped profile as seen in the longitudinal plane. Referring to figure 5, the plurality of planes comprises a first facet 661, a second facet 662 and a third facet 663. The first facet 661 and the third facet 663 are extending in different planes which are parallel with each other but not intersecting each other. The facets 661, 663 are substantially perpendicular to the bottom wall 61 of the second guiding portion 39. The first facet 661 extends from the bottom wall 61 in a direction away from the first guiding portion 37. The second facet 662 extends in a plane intersecting the planes in which the first facet 661 and the third facet 663 are extending. In other words, facet 662 is an inclined facet joining the first facet 661 to the third facet 663. The third facet extends from an end of the second facet 662 to the tongue 67 of the stop element 65. The first facet 661 is closer to shaft 7 than the third facet 663 as seen in the longitudinal plane.

As illustrated in figure 6, the free end 118 of the hook 102 imposed a force on the inclined second facet 662 which in turn allows the bending of the first guiding portion 37 and the second guiding portion 39.

The second guiding portion 39 comprises at least one edge 75. The edge 75 is at the junction between the bottom wall 61 of the second guiding portion 39 and the stop element 65 of the second guiding portion 39. The edge 75 extends along the transversal axis T. The edge 75 has a rounded shape.

As illustrated in figure 6, the adapter can be in a constrained state upon assembly of the adapter 3 with the hook 102 represented with a dashed line. Indeed as explained above, the free end 118 of the hook 102 imposed a force on the inclined second facet 662 which in turn allows the bending of the first guiding portion 37 and the second guiding portion 39 towards each other because they are connected to the shaft 7. This means also that the opening 33 changes its height, measured along the vertical axis as seen in the transversal plan defined above. So, the height of the opening changes between the rest state of the adapter as shown in figure 3 and the constrained state as shown in figure 6.

In figure 6, the bending is stopped when the rim 55 and the edge 75 are contacting each other. By limiting the bending the free end 118 and so the lower strand 106 of the hook 102 cannot pass overt the stop element 65.

n figure 3 and in figure 4, the second guiding portion 39 comprises two ribs 77 in the cavity 71 to accommodate a narrower version of the hook 102 - for example having a transverse width D_{T} substantially equal to 9mm instead of 12mm. Each rib 77 extends along the longitudinal axis L and along a junction between the bottom wall 61 of the second guiding portion 39 and one of the lateral walls 63 of the second guiding portion 39. Thus, the section of the second guiding portion 39 as seen in the transversal plane gets smaller as one moves away from the shaft 7 along the longitudinal axis L.

As seen on the embodiment illustrated on figure 3, the adapter 3 has a plane of symmetry substantially parallel to a longitudinal and vertical median plane P. And as seen on the embodiment illustrated on figure 4, the adapter 3 has a plane of symmetry substantially parallel to a horizontal and longitudinal median plane Q. Consequently, the first guiding portion 37 is identical to the second guiding portion 39. Thus, it makes it easier for the operator of the adapter 3 to assemble the hook 102 with the adapter 3. Indeed, there is no more question about orientation or on conformation of the adapter 3 with respect to its cooperation with the hook 102.

The adapter 3 is a one-piece molded part. It can comprise a synthetic element like a polymer.

The adapter 3 is an elastically deformable part between a rest state shown in figure 4 and a constrained state shown in figure 6.

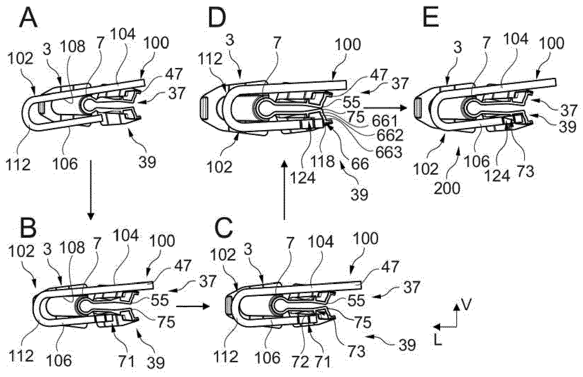

The method of assembling the wiper arm 100 with the adapter 3 will now be described in reference to figure 7. The assembly of these two parts will form the assembly 200 as seen in figure 7 configuration E.

Referring to figure 7 configuration A, firstly the shaft is introduced in between the upper strand 104 and the lower strand 106 of the hook 102 of the wiper arm 100. The tongue 47 of the first guiding portion 37 is then in contact with the internal face 108 of the upper strand 104.

Afterwards, the adapter 3 is pushed towards the intermediate strand 112. As illustrated on figure 7 configuration B, the lower strand 106 enters in the cavity 71 of the second guiding portion 39 while the tongue 47 of the first guiding portion 37 stays in contact with the internal face 108 of the upper strand 104. The adapter 3 begins to be elastically distorted as seen on figure 7 configuration B. In other words, the first guiding portion 37 and the second guiding portion 39 are slightly bent with respect to the shaft 7 of the adapter 3. Consequently, the rim 55 of the first guiding portion 37 is getting closer to the edge 75 of the second guiding portion 39.

As the adapter 3 moves closer to the intermediate strand 112, the lower strand 106 gets in touch with the inclined face 72 of the locking element 73 of the second guiding portion 39 as illustrated on figure 7 configuration C. The guiding portions 37, 39 are getting even closer to each other in configuration C and so does the rim 55 with the edge 75.

Referring to figure 7 configuration D, ultimately the free end 118 of the hook 102 makes contact with the face 66 of the stop element 65. At this instant the locking member 128 is facing the locking element 73 of the second guiding portion 39. The plurality of planes (661, 662, 663) of the face 66 of the stop element 65 amplify the bending of the guiding portion and so permit the contacting between the rim 55 of the first guiding portion 37 and the edge 75 of the second guiding portion 39. The contact between the rim 55 and the edge 75 prevents the lower strand 106 to pass over the stop element 65. Thus, the contact between the shaft 7 and the curved part 112 of the hook 102 is avoided. Furthermore, the adapter 3 is guaranteed to the in the right longitudinal position with respect to the hook 102. The tongue 47 of the first guiding portion 37 is still in contact with the internal face 108 of the upper strand 104. Consequently, the wiper blade 300 is in the right position with respect to the arm.

The adapter 3 respond to the bending by trying to revert to its shape when resting since it is elastically deformable. Therefore, the locking element 73 penetrates the locking member 124 and longitudinally locks the adapter 3 with the wiper arm 100 forming the assembly 200 as illustrated in figure 7 configuration E. Configuration E corresponds to the position of use of the adapter 3 when the adapter 3 is correctly positioned in the hook 102.

The assembly can also be carried out by first placing the adapter 3 on the articulation rod 306. The articulation rod 306 is fitted from back to front within the internal housing 35 of the shaft 7 along the axis longitudinal L. Then the hook 102 of the wiper arm 100 is placed on the adapter 3 as described above.

To unlock and so disassemble the adapter 3 from the end portion 101 of the wiper arm 100, the operator must press on the tongue 67 of the stop element 65 of the second guiding portion 39. Consequently, the second guiding portion 39 is deformed and brought close to the first guiding portion 37. The locking element 73 of the second guiding portion 39 then can get out of the locking member 124 and the hook 102 can be withdrawn from the adapter 3.

Since the illustrated embodiment of the adapter 3 has a plane of symmetry substantially parallel to a longitudinal and vertical median plane P and also has a plane of symmetry substantially parallel to a horizontal and longitudinal median plane Q, the first guiding portion 37 et the second guiding portion 39 are interchangeable with each other and all characteristics of one guiding portion is transposable to the other guiding portion.

Of course, the invention is not limited to the examples which have just been described and numerous modifications can be made to these examples without departing from the scope of the invention defined by the claims.

## Claims

1. Adapter (3) for the connection of a wiper blade (300) to a terminal portion (101) of a wiper arm (100) which is a hook (102) having a curved part (112) and a free end (118), comprising two vertical flanks (5) arranged so that the hook (102) is received between the two said flanks (5), at least one shaft (7) which is extending between the two vertical flanks (5), a front portion (11) and a rear portion (13) of the adapter (3) which are delimited by a central axis (A) of the shaft (7), the rear portion (13) comprising two guiding portions (37, 39), each guiding portion (19, 21) having a U shape section, a first guiding portion (37) comprising an abutment (45) configured to contact an internal face (104) of the hook (102), a second guiding portion (39) comprising a stop element (65) configured to contact the free end (118) of the hook (102), **characterized in that** the first guiding portion (37) and the second guiding portion (39) are adapted to contact each other in order to avoid contact between the shaft (7) and the curved part (112) of the hook (102).

2. Adapter according to the preceding claim, wherein the U shape of the second guiding portion (39) comprises a bottom wall (61) and lateral walls (63) aligned with the vertical flanks (7), the contact being formed by an edge (75) between the bottom wall (61) of the second guiding portion (39) and the stop element (65) of the second guiding portion (39).

3. Adapter (3) according to the preceding claim, wherein the second guiding portion (39) comprises a cavity (71) delimited by the bottom wall (61), the lateral walls (63) and one face (66) of the stop element (65), the face (66) of the stop element (65) having a plurality of planes (661, 662, 663).

4. Adapter (3) according to any of the claims 2 to 3, wherein the U shape of the first guiding portion (37) comprises a bottom wall (41) and lateral walls (43) aligned with the vertical flanks (5), the first guiding portion (37) comprises at least one rim (55) between a bottom wall (41) of the first guiding portion (37) and the abutment (45) of the first guiding portion (37), the rim (55) being in contact with the edge (75) in order to avoid contact between the shaft (7) and the curved part (112) of the hook (102).

5. Adapter (3) according to any of the preceding claims, wherein at least one of the guiding portions (37, 39) comprises a locking element (53, 73) intended to cooperate with a locking member (124) of the hook (102) of the wiper arm (100).

6. Adapter (3) according to any of the claims 2 to 4 in combination with claim 5, wherein the locking element (53, 73) protrudes from the bottom wall (41, 61) of said one of the guiding portions (37, 39) and extends into a cavity (51, 71) delimited by the bottom wall (41, 61) of one of the guiding portions (37, 39) and the lateral portions (43, 63) of said one of the guiding portions (37, 39).

7. Adapter (3) according to the preceding claim, wherein the bottom wall (41, 61) of one of the guiding portions (37, 39) extends in two planes intersecting each other (K, L; M, N) substantially at the level of the locking element (53, 73).

8. Adapter (3) according to the preceding claim, wherein an angle (A) between the two planes intersecting each other is comprised between 181° and 190°.

9. Adapter (3) according to any of the preceding claims, wherein the two guiding portions (37, 39) have an identical conformation.

10. Adapter (3) according to any of the preceding claims, wherein the adapter (3) has a plane of symmetry substantially parallel to a longitudinal and vertical median plane (P).

11. Adapter (3) according to any of the preceding claims, wherein the adapter (3) has a plane of symmetry substantially parallel to a horizontal and longitudinal median plane (Q).

12. Adapter (3) according to any of the preceding claims, wherein the contact between the first guiding portion (37) and the second guiding portion (39) is made upon bending of the first guiding portion (37) and/or the second guiding portion (39) with respect to the shaft (7).

13. Adapter (3) according to any of the preceding claims, wherein one of the guiding portion (37, 39) extends along an extension axis, an area of the U-shape section of said one of the guiding portions (37, 39) varies along the extension axis as seen in a plane perpendicular to the extension axis.

14. Assembly (200) comprising a wiper arm (100) with a terminal portion (101) which is a hook having a curved part (112) and an adapter (3) according to any of the preceding claims wherein the adapter (3) is configured so that the curved part (112) of the hook (102) is at a non-zero distance from the shaft (7) of the adapter (3) when the assembly is assembled.

15. Wiping system (1) comprising at least one wiper blade (300) adapted to be driven in rotation by a wiper arm (100), the wiper arm (100) and the wiper blade (300) being connected together by an adapter (3) according to any of the preceding claims 1 to 13 or by an assembly according to claim 14.

## Patentansprüche

1. Adapter (3) für die Verbindung eines Wischerblatts (300) mit einem Anschlussteil (101) eines Wischerarms (100), der ein Haken (102) mit einem gekrümmten Teil (112) und einem freien Ende (118) ist, umfassend zwei vertikale Flanken (5), so angeordnet, dass der Haken (102) zwischen den zwei Flanken (5) aufgenommen ist, zumindest einen Schaft (7), der sich zwischen den zwei vertikalen Flanken (5) erstreckt, einen vorderen Teil (11) und einen hinteren Teil (13) des Adapters (3), die durch eine mittlere Achse (A) des Schafts (7) begrenzt sind, wobei der hintere Teil (13) Folgendes umfasst zwei Führungsteile (37, 39), wobei jeder Führungsteil (19, 21) einen U-förmigen Abschnitt aufweist, wobei ein erster Führungsteil (37) ein Auflager (45) umfasst, das dazu ausgelegt ist, mit einer inneren Fläche (104) des Hakens (102) in Kontakt zu kommen, wobei ein zweiter Führungsteil (39) ein Anschlagelement (65) umfasst, das dazu ausgelegt ist, mit dem freien Ende (118) des Hakens (102) in Kontakt zu kommen, **dadurch gekennzeichnet, dass** der erste Führungsteil (37) und der zweite Führungsteil (39) dazu angepasst sind, miteinander in Kontakt zu kommen, um einen Kontakt zwischen dem Schaft und dem gekrümmten Teil (112) des Hakens (102) zu verhindern.

2. Adapter nach dem vorhergehenden Anspruch, wobei die U-Form des zweiten Führungsteils (39) eine untere Wand (61) und seitliche Wände (63), die mit den vertikalen Flanken (7) ausgerichtet sind, umfasst, wobei der Kontakt durch eine Kante (75) zwischen der unteren Wand (61) des zweiten Führungsteils (39) und dem Anschlagelement (65) des zweiten Führungsteils (39) gebildet wird.

3. Adapter (3) nach dem vorhergehenden Anspruch, wobei der zweite Führungsteil (39) einen Hohlraum (71) umfasst, der durch die untere Wand (61), die seitlichen Wände (63) und eine Seite (66) des Anschlagelements (65) begrenzt wird, wobei die Seite (66) des Anschlagelements (65) mehrere Ebenen (661, 662, 663) aufweist.

4. Adapter (3) nach einem der Ansprüche 2 bis 3, wobei die U-Form des ersten Führungsteils (37) eine untere Wand (41) und seitliche Wände (43), die mit den vertikalen Flanken (5) ausgerichtet sind, umfasst, wobei der erste Führungsteil (37) zumindest einen Rand (55) zwischen einer unteren Wand (41) des ersten Führungsteils (37) und dem Auflager (45) des ersten Führungsteils (37) umfasst, wobei der Rand (55) in Kontakt mit der Kante (75) ist, um einen Kontakt zwischen dem Schaft (7) und dem gekrümmten Teil (112) des Hakens (102) zu verhindern.

5. Adapter (3) nach einem der vorhergehenden Ansprüche, wobei zumindest einer der Führungsteile (37, 39) ein Verriegelungselement (53, 73) umfasst, das dazu dient, mit einem Verriegelungsglied (124) des Hakens (102) des Wischerarms (100) zusammenzuwirken.

6. Adapter (3) nach einem der Ansprüche 2 bis 4 in Kombination mit Anspruch 5, wobei das Verriegelungselement (53, 73) aus der unteren Wand (41, 61) des einen der Führungsteile (37, 39) herausragt und sich in einen Hohlraum (51, 71) erstreckt, der durch die untere Wand (41, 61) von einem der Führungsteile (37, 39) und die seitlichen Teile (43, 63) des einen der Führungsteile (37, 39) begrenzt wird.

7. Adapter (3) nach dem vorhergehenden Anspruch, wobei sich die untere Wand (41, 61) von einem der Führungsteile (37, 39) in zwei Ebenen erstreckt, die einander (K, L; M, N) im Wesentlichen auf dem Niveau des Verriegelungselements (53, 73) schneiden.

8. Adapter (3) nach dem vorhergehenden Anspruch, wobei ein Winkel (A) zwischen den zwei einander schneidenden Ebenen zwischen 181° und 190° ist.

9. Adapter (3) nach einem der vorhergehenden Ansprüche, wobei die zwei Führungsteile (37, 39) eine identische Ausformung aufweisen.

10. Adapter (3) nach einem der vorhergehenden Ansprüche, wobei der Adapter (3) eine Symmetrieebene aufweist, die im Wesentlichen parallel zu einer längs verlaufenden und vertikalen Medianebene (P) ist.

11. Adapter (3) nach einem der vorhergehenden Ansprüche, wobei der Adapter (3) eine Symmetrieebene aufweist, die im Wesentlichen parallel zu einer horizontalen und längs verlaufenden Medianebene ist.

12. Adapter (3) nach einem der vorhergehenden Ansprüche, wobei der Kontakt mit dem ersten Führungsteil (37) und dem zweiten Führungsteil (39) beim Biegen des ersten Führungsteils (37) und/oder des zweiten Führungsteils (39) bezüglich des Schafts (7) hergestellt wird.

13. Adapter (3) nach einem der vorhergehenden Ansprüche, wobei sich einer der Führungsteile (37, 39) entlang einer Ausdehnungsachse erstreckt, ein Bereich des U-förmigen Abschnitts des einen Führungsteils (37, 39) entlang der Ausdehnungsachse variiert, wie in einer Ebene senkrecht zur Ausdehnungsachse gesehen.

14. Anordnung (200), umfassend einen Wischerarm (100) mit einem Anschlussteil (101), der ein Haken ist, der einen gekrümmten Teil (112) aufweist, und einen Adapter (3) nach einem der vorhergehenden Ansprüche, wobei der Adapter (3) so ausgelegt ist, dass der gekrümmte Teil (112) des Hakens (102) bei einem von Null verschiedenen Abstand vom Schaft (7) des Adapters (3) ist, wenn die Anordnung zusammengebaut ist.

15. Wischsystem (1), umfassend zumindest ein Wischerblatt (300), dazu angepasst, durch einen Wischerarm (100) in Rotation angetrieben zu werden, wobei der Wischerarm (100) und das Wischerblatt (300) durch einen Adapter (3) nach einem der vorhergehenden Ansprüche 1 bis 13 oder durch eine Anordnung nach Anspruch 14 miteinander verbunden sind.

## Revendications

1. Adaptateur (3) pour la liaison d'une lame d'essuie-glace (300) à une portion terminale (101) d'un bras d'essuie-glace (100), qui est un crochet (102) ayant une partie courbée (112), et une extrémité libre (118), comprenant deux flancs verticaux (5) agencés pour que le crochet (102) soit reçu entre les deux dits flancs (5), au moins un arbre (7) qui s'étend entre les deux flancs verticaux (5), une portion avant (11) et une portion arrière (13) de l'adaptateur (3) qui sont délimitée par un axe central (A) de l'arbre (7), la portion arrière (13) comprenant deux portions de guidage (37, 39), chaque portion de guidage (19, 21) ayant une section en forme de U, une première portion de guidage (37) comprenant une butée (45) configurée pour entrer en contact avec une face interne (104) du crochet (102), une seconde portion de guidage (39) comprenant un élément d'arrêt (65) configuré pour entrer en contact avec l'extrémité libre (118) du crochet (102), **caractérisé en ce que** la première portion de guidage (37) et la seconde portion de guidage (39) sont adaptées pour entrer en contact l'une avec l'autre afin d'éviter le contact entre l'arbre (7) et la partie courbée (112) du crochet (102).

2. Adaptateur selon la revendication précédente, dans lequel la forme de U de la seconde portion de guidage (39) comprend une paroi inférieure (61) et des parois latérales (63) alignées avec les flancs verticaux (7), le contact étant formé par un bord (75) entre la paroi inférieure (61) de la seconde portion de guidage (39) et l'élément d'arrêt (65) de la seconde portion de guidage (39) .

3. Adaptateur (3) selon la revendication précédente, dans lequel la seconde portion de guidage (39) comprend une cavité (71) délimitée par la paroi inférieure (61), les parois latérales (63) et une face (66) de l'élément d'arrêt (65), la face (66) de l'élément d'arrêt (65) ayant une pluralité de plans (661, 662, 663).

4. Adaptateur (3) selon l'une quelconque des revendications 2 et 3, dans lequel la forme de U de la première portion de guidage (37) comprend une paroi inférieure (41) et des parois latérales (43) alignées avec les flancs verticaux (5), la première portion de guidage (37) comprend au moins un pourtour (55) entre une paroi inférieure (41) de la première portion de guidage (37) et la butée (45) de la première portion de guidage (37), le pourtour (55) étant en contact avec le bord (75) afin d'éviter le contact entre l'arbre (7) et la partie courbée (112) du crochet (102).

5. Adaptateur (3) selon l'une quelconque des revendications précédentes, dans lequel au moins une des portions de guidage (37, 39) comprend un élément de verrouillage (53, 73) prévu pour coopérer avec un organe de verrouillage (124) du crochet (102) du bras d'essuie-glace (100).

6. Adaptateur (3) selon l'une quelconque des revendications 2 à 4 en association avec la revendication 5, dans lequel l'élément de verrouillage (53, 73) fait saillie depuis la paroi inférieure (41, 61) de ladite une des portions de guidage (37, 39) et s'étend dans une cavité (51, 71) délimitée par la paroi inférieure (41, 61) d'une des portions de guidage (37, 39) et les portions latérales (43, 63) de ladite une des portions de guidage (37, 39) .

7. Adaptateur (3) selon la revendication précédente, dans lequel la paroi inférieure (41, 61) d'une des portions de guidage (37, 39) s'étend dans deux plans s'intersectant l'un l'autre (K, L ; M, N) sensiblement au niveau de l'élément de verrouillage (53, 73).

8. Adaptateur (3) selon la revendication précédente, dans lequel un angle (A) entre les deux plans l'intersectant l'un l'autre est compris entre 181 ° et 190 °.

9. Adaptateur (3) selon l'une quelconque des revendications précédentes, dans lequel les deux portions de guidage (37, 39) ont une structure identique.

10. Adaptateur (3) selon l'une quelconque des revendications précédentes, dans lequel l'adaptateur (3) a un plan de symétrie sensiblement parallèle à un plan médian longitudinal et vertical (P).

11. Adaptateur (3) selon l'une quelconque des revendications précédentes, dans lequel l'adaptateur (3) a un plan de symétrie sensiblement parallèle à un plan médian horizontal et longitudinal (Q).

12. Adaptateur (3) selon l'une quelconque des revendications précédentes, dans lequel le contact entre la première portion de guidage (37) et la seconde portion de guidage (39) est réalisé lors du fléchissement de la première portion de guidage (37) et/ou de la seconde portion de guidage (39) par rapport à l'arbre (7).

13. Adaptateur (3) selon l'une quelconque des revendications précédentes, dans lequel une des portions de guidage (37, 39) s'étend le long d'un axe d'extension, une superficie de la section en forme de U de ladite une des portions de guidage (37, 39) varie le long de l'axe d'extension en vue dans un plan perpendiculaire à l'axe d'extension.

14. Ensemble (200) comprenant un bras d'essuie-glace (100) avec une portion terminale (101), qui est un crochet ayant une partie courbée (112), et un adaptateur (3) selon l'une quelconque des revendications précédentes, dans lequel l'adaptateur (3) est configuré pour que la partie courbée (112) du crochet (102) soit à une distance non nulle de l'arbre (7) de l'adaptateur (3) lorsque l'ensemble est assemblé.

15. Système d'essuyage (1), comprenant au moins une lame d'essuie-glace (300) adaptée pour être entraînée en rotation par un bras d'essuie-glace (100), le bras d'essuie-glace (100) et la lame d'essuie-glace (300) étant reliés l'un à l'autre par un adaptateur (3) selon l'une quelconque des revendications précédentes 1 à 13 ou par un ensemble selon la revendication 14.
